# EUROPÄISCHE PATENTSCHRIFT

(11) **EP 2 694 411 B1**
(45) Veröffentlichungstag und Bekanntmachung des Hinweises auf die Patenterteilung: **03.12.2014**
(21) Anmeldenummer: 12706581.1
(22) Anmeldetag: 29.02.2012
(51) Int. Cl.: B65G 47/84

(54) **TRANSPORTVORRICHTUNG**
TRANSPORTING APPARATUS
DISPOSITIF DE TRANSPORT

(30) Priorität: 04.04.2011 DE 102011006714
(43) Veröffentlichungstag der Anmeldung: 12.02.2014
(73) Patentinhaber: Robert Bosch GmbH, 70442 Stuttgart (DE)
(72) Erfinder: MAYER, Ulrich, 74564 Crailsheim (DE)
(86) Internationale Anmeldenummer: PCT/EP2012/053429
(87) Internationale Veröffentlichungsnummer: WO 2012/136413

(56) Entgegenhaltungen:
- DE-A1- 2 052 717
- DE-A1- 4 243 786
- FR-A- 1 572 295
- FR-A1- 2 824 541

## Beschreibung

### Stand der Technik

Die vorliegende Erfindung betrifft eine Transportvorrichtung zum Transport von Behältnissen, wie z. B. Ampullen.

Transportvorrichtungen mit angetriebenen Transporträdern, die zum Transport von Ampullen für Füllmaschinen insbesondere im pharmazeutischen Bereich verwendet werden, sind aus dem Stand der Technik in unterschiedlichen Ausgestaltungen, z. B. aus der Druckschrift DE 10 2008 002 245 A1, bekannt. Hierbei werden die Behältnisse zum Transport in zangenartige Aufnahmeeinheiten eingesetzt und darin stehend transportiert. Dazu sind aufwändige Boden- und Gegenführungen erforderlich, die zu Produktverschleppungen während des Transports führen können. Ferner weisen die Transportvorrichtungen eine Vielzahl von Verschleißteilen auf, die die Betriebssicherheit bzw. Einsatzzeit erheblich einschränken.

DE 20 52 717 A1 zeigt eine Transportvorrichtung nach dem Oberbegriff des Anspruchs 1.

### Offenbarung der Erfindung

Die erfindungsgemäße Transportvorrichtung mit den Merkmalen des Anspruchs 1 weist demgegenüber den Vorteil auf, dass hierbei die Behältnisse in sich gesteuert öffnenden und schließenden Aufnahmeeinheiten transportiert werden. Dabei werden die Behältnisse in den Aufnahmeeinheiten eingeklemmt und hängend bzw. getragen transportiert. Ferner wird die Klemmkraft hierbei, z. B. zur Zuführung und Entnahme der Behältnisse bzw. zur Bearbeitung in Bearbeitungsstationen, automatisch aufgehoben. Dies wird erfindungsgemäß dadurch erreicht, dass die Transportvorrichtung ein drehbares Transportrad mit einer Vielzahl von Aufnahmeeinheiten zur Aufnahme jeweils eines Behältnisses, sowie jeweils eine an jeder Aufnahmeeinheit angeordnete Klemmvorrichtung und eine feststehende Steuerkurve umfasst. Ferner weist jede Klemmvorrichtung jeweils eine Steuerrolle, ein Rückstellelement und einen Klemmhebel auf, der um einen Drehpunkt schwenkbar ist. Hierbei ist ein Behältnis zwischen dem Klemmhebel und einer Fläche der Aufnahmeeinheit klemmbar, wobei die Steuerrolle jeder Klemmvorrichtung die Steuerkurve kontaktiert, um ein Öffnen der Klemmvorrichtung zu bewirken. Das Rückstellelement führt den Klemmhebel automatisch wieder in eine geschlossene Stellung zurück. Hierdurch wird eine Produktverschleppung über die Bodenführung weitestgehend verhindert. Außerdem ist eine Gegenführung hierbei nicht erforderlich, woraus eine bessere Zugänglichkeit der Transportvorrichtung resultiert. Ferner wird eine erhebliche Reduzierung der einem Verschleiß unterworfenen Bauteile erreicht.

Erfindungsgemäß weist jede Aufnahmeeinheit eine Vielzahl von Führungsrollen auf. Die Führungsrollen sind an einer Oberseite und einer Unterseite des Transportrads angeordnet. Dadurch werden eine zuverlässige Abstützung am Transportrad und eine zuverlässige, senkrechte Position der Behältnisse in der Aufnahmeeinheit bei geöffneter Klemmvorrichtung sichergestellt.

Die Unteransprüche zeigen bevorzugte Weiterbildungen der Erfindung.

Besonders bevorzugt ist der Klemmhebel in einem im Transportrad ausgebildeten Schlitz angeordnet. Hierdurch wird ein besonders kompakter Aufbau erreicht, der Beschädigungen und einen Verschleiß des Klemmhebels weitestgehend verhindert und eine leichtere Reinigung ermöglicht.

Gemäß einer weiteren bevorzugten Ausführungsform der Erfindung liegt der Drehpunkt im Bereich des Klemmhebels. Hierdurch wird ein betriebssicheres Öffnen und Schließen der Klemmvorrichtung ohne die Gefahr eines Verklemms gewährleistet. Zudem ist somit ein weiter vereinfachter kompakter Aufbau der Klemmvorrichtung realisierbar.

Weiterhin bevorzugt sind die Führungsrollen jeweils paarweise an der Oberseite der Unterseite des Transportrads angeordnet. Hierdurch wird insbesondere in den Bearbeitungsstationen, in denen die Glasampullen nach dem Lösen der Klemmung auf darunter angeordneten Bodenbereichen stehen und z. B. rotierend geöffnet oder verschlossen bzw. befüllt werden, eine zuverlässige beidseitige vertikale Abstützung mit geringer Reibung sichergestellt.

In weiterer vorzugsweiser Ausgestaltung fällt eine Drehachse einer der Führungsrollen mit dem Drehpunkt des Klemmhebels der Klemmvorrichtung zusammen. Dadurch wird ein besonders einfacher Aufbau der Aufnahmeeinheit mit einer reduzierten Bauteilanzahl erreicht. Zudem wird hierdurch ein rascher und einfacher Austausch von defekten Bauteilen ermöglicht.

Vorzugsweise sind die Behältnisse Ampullen, insbesondere Glasampullen. Dadurch, dass der Klemmvorgang am unteren zylindrischen Bereich der Glasampullen mit üblicherweise dickeren Wandstärken erfolgt, können Beschädigungen weitestgehend verhindert werden.

Weiterhin bevorzugt sind die Steuerrolle und die Führungsrollen gleich ausgebildet. Dies ermöglicht die kosteneffektive Verwendung einer Vielzahl von Gleichteilen.

Besonders bevorzugt ist das Rückstellelement eine Druckfeder, welche sich am Transportrad abstützt. Dadurch wird ein kostengünstiges und zuverlässiges Rückstellen des Klemmhebels bzw. Schließen der Klemmvorrichtung erreicht.

### Kurze Beschreibung der Zeichnung

Nachfolgend wird ein Ausführungsbeispiel der Erfindung unter Bezugnahme auf die begleitende Zeichnung im Detail beschrieben. In der Zeichnung ist:
- Figur 1: eine schematische perspektivische Darstellung eines Teils einer erfindungsgemäßen Transportvorrichtung gemäß einem bevorzugten Ausführungsbeispiel der Erfindung,
- Figur 2: eine Unteransicht der Transportvorrichtung von Figur 1 mit geschlossener Klemmvorrichtung,
- Figur 3: eine Unteransicht der Transportvorrichtung von Figur 1 mit geöffneter Klemmvorrichtung,
- Figur 4: eine perspektivische Unteransicht eines Teils der Transportvorrichtung, und
- Figur 5: eine Schnittdarstellung der Transportvorrichtung gemäß einem Schnitt V-V in Figur 2.

### Ausführungsform der Erfindung

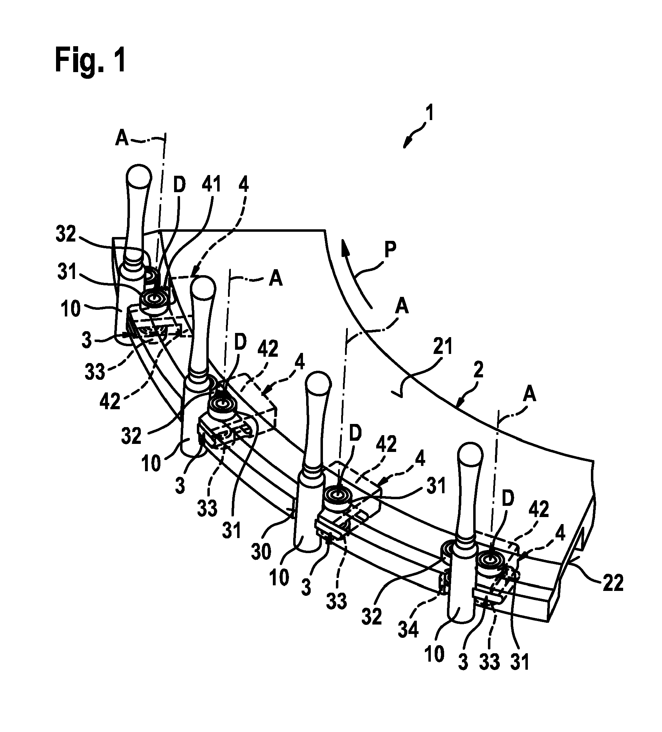

Nachfolgend wird unter Bezugnahme auf die Figuren 1 bis 5 eine Transportvorrichtung 1 zum Transport von Behältnissen gemäß einem bevorzugten Ausführungsbeispiel der Erfindung im Detail beschrieben.

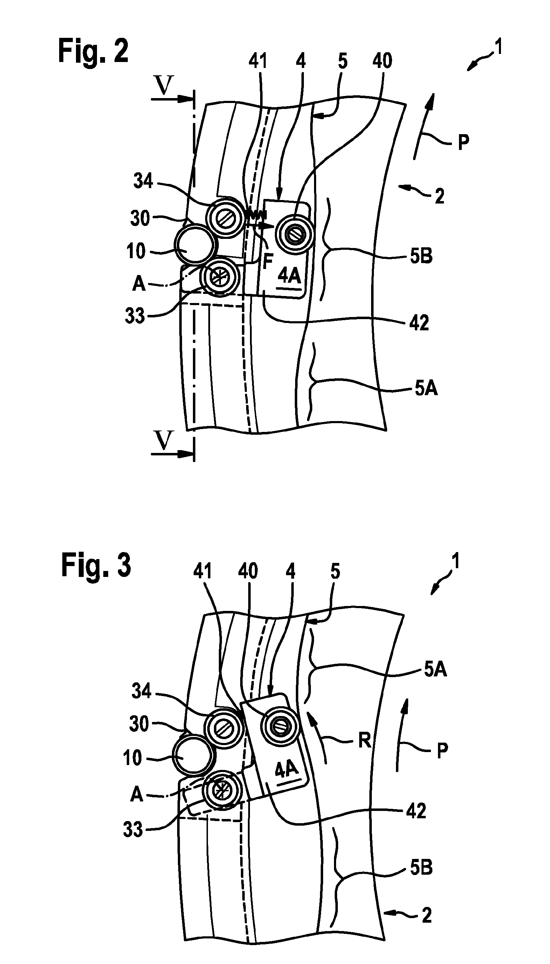

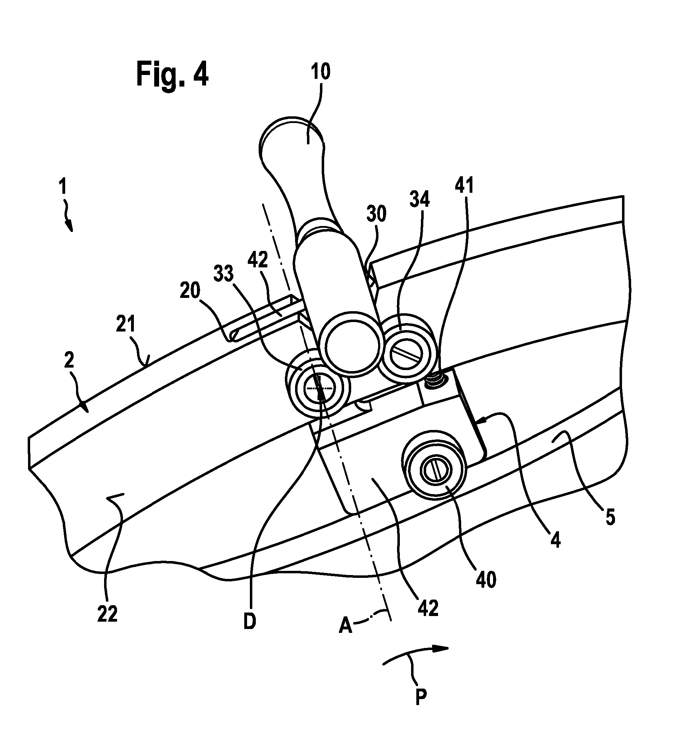

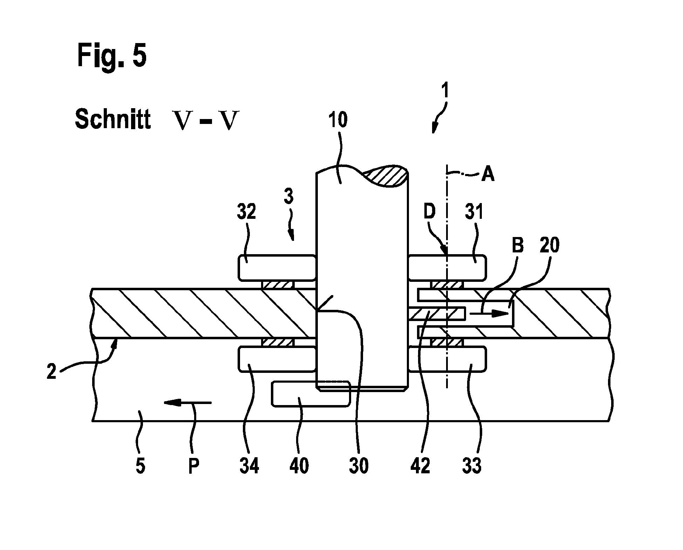

Wie aus Figur 1 ersichtlich, umfasst die Transportvorrichtung 1 ein in Richtung eines Pfeils P drehbares Transportrad 2 mit einer Vielzahl von Aufnahmeeinheiten 3 zur Aufnahme jeweils eines Behältnisses 10, das in diesem Ausführungsbeiospiel eine Glasampulle ist. Jede Aufnahmeeinheit 3 weist eine Vielzahl von identisch ausgebildeten Führungsrollen 31, 32, 33, 34 auf, von denen jeweils die ersten und zweiten Führungsrollen 31 und 32 an einer Oberseite 21 und die dritten und vierten Führungsrollen 33 und 34 an einer Unterseite 22 des Transportrads 2 angeordnet sind (vergl. Figur 5). Ferner ist eine Vielzahl von Klemmvorrichtungen 4 vorgesehen, von denen jeweils eine an jeder Aufnahmeeinheit 3 angeordnet ist. Jede Klemmvorrichtung 4 umfasst einen Klemmhebel 42, welcher in einem im Transportrad 2 ausgebildeten Schlitz 20 (siehe Figur 4) angeordnet ist und um einen Drehpunkt D schwenkbar ist, der mit einer Drehachse A der Führungsrolle 31 zusammenfällt. Ferner ist an jeder Klemmvorrichtung 4 jeweils ein Rückstellelement 41 (vergl. Figur 2) vorgesehen, das vorzugsweise als Druckfeder ausgebildet ist, die sich am Transportrad 2 abstützt und eine Rückstellkraft auf die Klemmvorrichtung 4 ausübt. Jedes Behältnis 10 ist zwischen dem Klemmhebel 42 und einer vertikalen Fläche 30 der Aufnahmeeinheit 3 geklemmt (siehe Figur 4) und wird somit in der Aufnahmeeinheit 3 getragen bzw. eingeklemmt hängend transportiert.

Wie detailliert aus Figur 2 und 3 ersichtlich ist, ist am Transportrad 2 ferner eine feststehend angeordnete Steuerkurve 5 vorgesehen. Aufgrund einer mit einem Pfeil F gekennzeichneten Federkraft des Rückstellelmements 41 befindet sich die Steuerkurve 5 mit einer an einer Unterseite 4A des Klemmhebels 42 angeordneten Steuerrolle 40 in Kontakt. Insbesondere liegt die Steuerrolle 40 nur zum Öffnen der Klemmvorrichtung 4 an der Steuerkurve 5 an. Wie aus Figur 2 und 3 ferner ersichtlich ist, ist die Steuerkurve 5 in Transportrichtung (Pfeil P) so ausgebildet, dass ein gesteuertes, selbsttätiges Öffnen der Klemmvorrichtung 4 bewirkt wird. Der Kurvenverlauf der Steuerkurve 5 weist hierzu in radialer Richtung abwechselnd angeordnete, kontinuierlich ineinander verlaufende geometrisch vorstehende Bereiche 5A und ausgenommene bzw. zurückgezogene Bereiche 5B auf.

Wenn die Steuerrolle 40, wie in Figur 2 veranschaulicht, in einem der ausgenommenen Bereiche 5B positioniert ist, befindet sich die Klemmvorrichtung 4 im geschlossenen Zustand, bei dem das Behältnis 10 eingeklemmt transportiert wird.

Sobald die Steuerrolle 40 in den in Drehrichtung P nachfolgenden vorstehenden Bereich 5A eintritt, erfolgt eine Schwenkbewegung, bei der der Klemmhebel 42 um den Drehpunkt D der Führungsrolle 31 (siehe Figur 1) bzw. die durch die Führungsrollen 31 und 33 verlaufende Drehachse A in Richtung eines Pfeils R geschwenkt wird. Hierbei wird der Klemmhebel 42 der Klemmvorrichtung 4 im Schlitz 20 des Transportrads 2, wie in Figur 5 veranschaulicht, in Richtung eines Pfeils B bewegt. Somit wird die in Figur 3 dargestellte geöffnete Stellung der Klemmvorrichtung 4 erreicht und das zwischen der Fläche 30 der Aufnahmeeinheit 3 und dem Klemmhebel 42 eingeklemmte Behältnis 10 freigegeben. An äußeren Umfangsbereichen des Transportrads 2, die den vorstehenden Bereichen 5A der Steuerkurve 5 mit geöffneten Klemmvorrichtungen 4 entsprechen, sind hier nicht dargestellte, periphere Bearbeitungsstationen angeordnet. Die Bearbeitungsstationen umfassen Bodenbereiche, auf denen die freigegebenen Behältnisse 10, z. B. für die Dauer eines Öffnungsvorgangs und/oder Befüllungsvorgangs und/oder Verschlussvorgangs und/oder Beschriftungsvorgangs, abgestützt werden.

Mittels der erfindungsgemäßen Transportvorrichtung 1 können die Behältnisse 10 in den Aufnahmeeinheiten 3 eingeklemmt und ohne Bodenkontakt transportiert werden, welche mittels der Steuerkurve 5 automatisch geöffnet werden. Zudem weist die Transportvorrichtung 1 einen vereinfachten Aufbau ohne erforderliche Gegenführungen auf, wodurch eine Produktverschleppung weitestgehend verhindert wird. Ferner wird eine bessere Zugänglichkeit und Reinigung der Transportvorrichtung 1 erreicht, sowie ein einfacher und rascher Austausch von defekten Bauteilen ermöglicht.

## Patentansprüche

1. Transportvorrichtung zum Transport von Behältnissen (10), umfassend:
ein drehbares Transportrad (2) mit einer Vielzahl von Aufnahmeeinheiten (3) zur Aufnahme jeweils eines Behältnisses (10),
- eine Vielzahl von Klemmvorrichtungen (4), wobei jeweils eine Klemmvorrichtung (4) an einer Aufnahmeeinheit (3) angeordnet ist, und
- eine feststehende Steuerkurve (5),
- wobei jede Klemmvorrichtung (4) jeweils eine Steuerrolle (40), ein Rückstellelement (41) und einen Klemmhebel (42) umfasst, welcher um einen Drehpunkt (D) schwenkbar ist,
- wobei ein Behältnis (10) zwischen dem Klemmhebel (42) und einer Fläche (30) der Aufnahmeeinheit (3) klemmbar ist,
- wobei die Steuerrolle (40) jeder Klemmvorrichtung (4) sich mit der Steuerkurve (5) in Kontakt befindet, um ein Öffnen der Klemmvorrichtung (4) zu bewirken, und
- wobei das Rückstellelement (41) den Klemmhebel (42) wieder in eine geschlossene Stellung zurückführt,
**dadurch gekennzeichnet, dass**
- jede Aufnahmeeinheit (3) eine Vielzahl von Führungsrollen (31, 32, 33, 34) aufweist, wobei
- die Führungsrollen (31, 32, 33, 34) an einer Oberseite (21) und einer Unterseite (22) des Transportrads (2) angeordnet sind, um eine zuverlässige Abstützung am Transportrad (2) und eine zuverlässige, senkrechte Position der Behältnisse (10) in der Aufnahmeeinheit (3) bei geöffneter Klemmvorrichtung (4) sicherzustellen.

2. Vorrichtung nach Anspruch 1, **dadurch gekennzeichnet, dass** der Klemmhebel (42) in einem im Transportrad (2) ausgebildeten Schlitz (20) angeordnet ist.

3. Vorrichtung nach Anspruch 1 oder 2, **dadurch gekennzeichnet, dass** der Drehpunkt (D) im Bereich des Klemmhebels (42) liegt.

4. Vorrichtung nach einem der vorhergehenden Ansprüche, **dadurch gekennzeichnet, dass** die Führungsrollen (31, 32, 33, 34) jeweils paarweise an der Oberseite (21) und der Unterseite (22) des Transportrads (2) angeordnet sind.

5. Vorrichtung nach einem der vorhergehenden Ansprüche, **dadurch gekennzeichnet, dass** eine Drehachse (A) einer der Führungsrollen (31) mit dem Drehpunkt (D) des Klemmhebels (42) der Klemmvorrichtung (4) zusammenfällt.

6. Vorrichtung nach einem der vorhergehenden Ansprüche, **dadurch gekennzeichnet, dass** die Behältnisse (10) Ampullen, insbesondere Glasampullen, sind.

7. Vorrichtung nach einem der vorhergehenden Ansprüche, **dadurch gekennzeichnet, dass** die Steuerrolle (40) und die Führungsrollen (31, 32, 33, 34) gleich ausgebildet sind.

8. Vorrichtung nach einem der vorhergehenden Ansprüche, **dadurch gekennzeichnet, dass** das Rückstellelement (41) eine Druckfeder ist, welche sich am Transportrad (2) abstützt.

## Claims

1. Transporting device for transporting containers (10), comprising:
a rotatable transporting wheel (2) having a multiplicity of receiving units (3) for receiving one container (10) each,
- a multiplicity of clamping devices (4), wherein one clamping device (4) is arranged on each receiving unit (3), and
- a stationary control cam (5),
- wherein each clamping device (4) comprises in each case one control roller (40), one restoring element (41) and one clamping lever (42) which is pivotable about a pivot point (D),
- wherein a container (10) is clampable between the clamping lever (42) and a surface (30) of the receiving unit (3),
- wherein the control roller (40) of each clamping device (4) is in contact with the control cam (5) in order to effect opening of the clamping device (4), and
- wherein the restoring element (41) returns the clamping lever (42) into a closed position again,
**characterized in that**
- each receiving unit (3) has a multiplicity of guide rollers (31, 32, 33, 34), wherein
- the guide rollers (31, 32, 33, 34) are arranged on a top side (21) and an underside (22) of the transporting wheel (2) in order to ensure reliable support on the transporting wheel and a reliable perpendicular position of the containers (10) in the receiving unit (3) with the clamping device (4) open.

2. Device according to Claim 1, **characterized in that** the clamping lever (42) is arranged in a slot (20) formed in the transporting wheel (2).

3. Device according to Claim 1 or 2, **characterized in that** the pivot point (D) is located in the region of the clamping lever (42).

4. Device according to one of the preceding claims, **characterized in that** the guide rollers (31, 32, 33, 34) are arranged in each case in pairs on the top side (21) and the underside (22) of the transporting wheel (2).

5. Device according to one of the preceding claims, **characterized in that** a rotation axis (A) of one of the guide rollers (31) coincides with the pivot point (D) of the clamping lever (42) of the clamping device (4).

6. Device according to one of the preceding claims, **characterized in that** the containers (10) are ampoules, in particular glass ampoules.

7. Device according to one of the preceding claims, **characterized in that** the control roller (40) and the guide rollers (31, 32, 33, 34) are formed in an identical manner.

8. Device according to one of the preceding claims, **characterized in that** the restoring element (41) is a compression spring which is supported on the transporting wheel (2).

## Revendications

1. Dispositif de transport pour le transport de récipients (10), comprenant :
une roue de transport rotative (2) ayant une pluralité d'unités de réception (3) pour recevoir à chaque fois un récipient (10),
- une pluralité de dispositifs de serrage (4), un dispositif de serrage (4) étant à chaque fois disposé sur une unité de réception (3), et
- une came de commande fixe (5),
- chaque dispositif de serrage (4) comprenant à chaque fois un rouleau de commande (40), un élément de rappel (41) et un levier de serrage (42) qui peut pivoter autour d'un centre de rotation (D),
- un récipient (10) pouvant être serré entre le levier de serrage (42) et une surface (30) de l'unité de réception (3),
- le rouleau de commande (40) de chaque dispositif de serrage (4) étant en contact avec la came de commande (5), afin de provoquer une ouverture du dispositif de serrage (4), et
- l'élément de rappel (41) ramenant le levier de serrage (42) dans une position fermée,
**caractérisé en ce que**
- chaque unité de réception (3) présente une pluralité de rouleaux de guidage (31, 32, 33, 34),
- les rouleaux de guidage (31, 32, 33, 34) étant disposés sur un côté supérieur (21) et un côté inférieur (22) de la roue de transport (2), afin de garantir un appui fiable sur la roue de transport (2) et une position verticale fiable des récipients (10) dans l'unité de réception (3) lorsque le dispositif de serrage (4) est ouvert.

2. Dispositif selon la revendication 1, **caractérisé en ce que** le levier de serrage (42) est disposé dans une fente (20) réalisée dans la roue de transport (2).

3. Dispositif selon la revendication 1 ou 2, **caractérisé en ce que** le centre de rotation (D) est situé dans la région du levier de serrage (42).

4. Dispositif selon l'une quelconque des revendications précédentes, **caractérisé en ce que** les rouleaux de guidage (31, 32, 33, 34) sont à chaque fois disposés par paire sur le côté supérieur (21) et le côté inférieur (22) de la roue de transport (2).

5. Dispositif selon l'une quelconque des revendications précédentes, **caractérisé en ce qu'**un axe de rotation (A) de l'un des rouleaux de guidage (31) coïncide avec le centre de rotation (D) du levier de serrage (42) du dispositif de serrage (4).

6. Dispositif selon l'une quelconque des revendications précédentes, **caractérisé en ce que** les récipients (10) sont des ampoules, notamment des ampoules de verre.

7. Dispositif selon l'une quelconque des revendications précédentes, **caractérisé en ce que** le rouleau de commande (40) et les rouleaux de guidage (31, 32, 33, 34) sont réalisés de manière identique.

8. Dispositif selon l'une quelconque des revendications précédentes, **caractérisé en ce que** l'élément de rappel (41) est un ressort de compression, qui s'appuie sur la roue de transport (2).
